# EUROPEAN PATENT SPECIFICATION

(11) **EP 1 884 844 B1**
(45) Date of publication and mention of the grant of the patent: **26.08.2009**
(21) Application number: 06015464.8
(22) Date of filing: 25.07.2006
(51) Int. Cl.: G05B 19/042

(54) **Multi protocol field device**
Mit mindestens zwei Protokollen arbeitendes Feldgerät
Dispositif de champ multi-protocole

(43) Date of publication of application: 06.02.2008
(73) Proprietor: SIEMENS AKTIENGESELLSCHAFT, 80333 München (DE)
(72) Inventor: Fritsch, Andreas, 92245 Kümmersbruck (DE); Korff, Maximilian, 90562 Kalchreuth (DE); Maeggi, Annette, 91052 Erlangen (DE); Wiesgicki, Bernhard, 92249 Vilseck (DE)

(56) References cited:
- WO-A-03/013104
- WO-A-20/06074981
- DE-A1- 10 206 657
- DE-A1- 10 251 502
- DE-C1- 19 606 673
- US-A1- 2004 199 681

## Description

### Field of the invention

The invention relates to field devices that are connectable to a field bus and to methods for setting up such a field device. Furthermore, the invention relates to systems for data communication over a field bus.

### Background art.

The WO 03/013104 A1 shows a field bus system comprising a master device and a field device connectable to a field bus. Whereby the field device is adapted to set-up at least two slave field bus units by setting for at least one of the slave field bus units a communication profile that is different from the communication profile set to one of the slave field bus units and to receive messages addressed to the at least two slave units from the field bus or to transmit messages addressed to originating from one of the at least two slave units to the field bus.

The AS-Interface was originally developed as field bus on the lowest automation level and it allowed 4 bits of user data. During the last few years, the specifications of the AS-Interface have been extended with such protocols that enable transmission of more than 4 bits of user data.

These extensions are denoted as supplementary AS-Interface communication profiles and described in the annex to the AS-Interface specification. The protocol extensions enable the transmission of 16 bit analog values (Combined transaction, Type 1, communication profile 7.3) or the transmission of a serial data stream (Combined transaction, Type 2, communication profile 7.5.5), for example.

These newer communication profiles enable the transmission of more than 4 bits of user data at the expense of cycle times. The cycle time needed for exchanging of time critical information increases, which is a consequence that in many situations cannot be accepted.

In the original 4I40 (4 input data sets and 4 output data sets for each AS-Interface cycle) transmission mode, the cycle time is less than 10 ms.

With the 7.3 - communication profile: 16 bit analog values can be transmitted in 7 AS-Interface cycles.

With the 7.4 - communication profile: either 4I40 transmission mode or a transmission mode for 16-bit analog values. If the slave is in the 4I4O transmission mode, no transmission of analog value is possible, and vice versa.

With the 7.5.5 - communication profile: 2 input data sets and two output data sets in each AS-Interface cycle enables a data stream of 100 bits/second as explained in DE 102 06 657 A1.

### Summary of the invention

For an increasing number of different kinds of field devices for industrial applications, such as frequency converters, soft starters, electromechanical switching devices, drives and so forth that are designed to be connectable to a field bus, transmission of both time critical information and of non-time critical information is required.

Current field bus implementations, in particular the AS-Interface, do not allow, for reasons explained above, flexible transmission of time-critical and non-time critical information.

Therefore it is the first object of the invention to improve a field device connectable to a field bus to enable more flexible transmitting or receiving of information messages, such as time-critical and non-time-critical information, and, likewise, to improve the existing field bus systems. These objects can be achieved with a field device as set out in claim 1, and with a field bus system as set out in claim 11.

The second object of the invention is to improve the methods for setting up a field device connectable to a field bus to enable more flexible transmitting or receiving of information messages, such as transmitting or receiving both time-critical and non-time-critical information. This object can be achieved as set out in claim 6.

The dependent claims describe various advantageous aspects of the invention.

### Advantages of the invention

If a field device connectable to a field bus is adapted to set-up at least two slave field bus units by setting for at least one of said slave field bus units a communication profile that is different from the communication profile set to one of said slave field bus units, the field device can be used to transmit or receive information messages as it would be possible for two distinct field devices so that limitations possibly defined in field bus specifications can be circumvented.

If the field device is adapted to set for at least one of said slave field bus units a communication profile that is different from the other communication profiles, by suitably selecting the different communication profile, desired information message transmission or reception characteristics may be obtained.

If for at least one of said slave field bus units a communication profile that enables the slave field bus unit only to receive data from said field bus is set, network congestion may be better avoided since these slave field bus units can then not send any messages over the field bus.

In a particularly advantageous embodiment of the invention, at least one of said at least two slave field bus units is adapted for communication of time-critical information messages and at least one of said at least two slave field bus units is adapted for communication of non-time-critical information messages.

### Detailed description

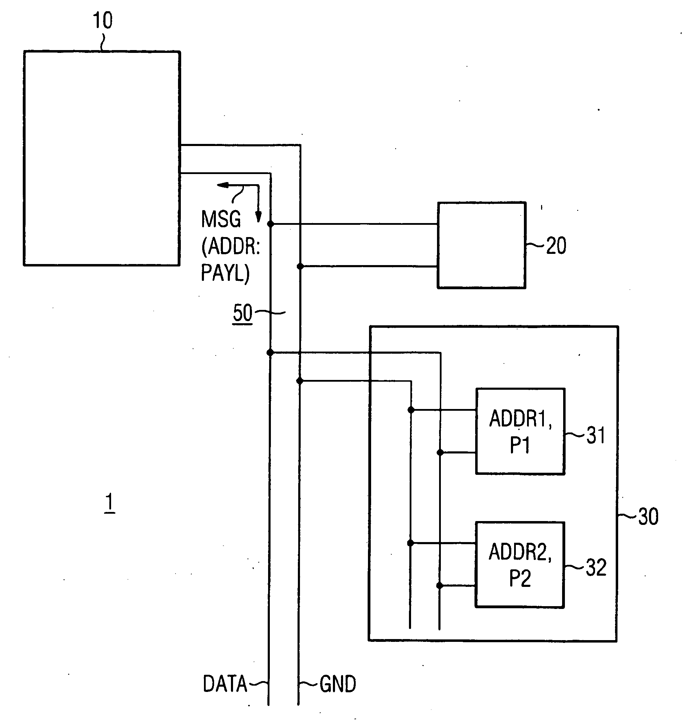

The sole Figure shows a field bus system 1 comprising a master device 10 connected to the AS-Interface 50, a conventional field device 20 and at least one field device 30 according to the present invention, also connected to the AS-Interface.

The field device 30 is in the Figure shown as connected to the AS-Interface. In general, a field device 30 would be sold as connectable to the AS-Interface, whereas it would be connected to the AS-Interface during installation of the automation system.

The field device 30 is adapted to set-up at least two AS-Interface slave units 31, 32 and to receive or transmit messages MSG addressed, preferably in their respective address field ADDR, to one of each said two AS-Interface slave units 31, 32 from the AS-Interface 50. Receiving or transmitting in this context preferably comprises the step of reading or writing the respective payload field PAYL of the message MSG.

The setting up may comprise assigning an address ADDR1 and communication profile P1 for the first AS-Interface slave unit 31 and an address ADDR2 and communication profile P2 for the second AS-Interface slave unit 32. Possibly these addresses are also communicated to the master device 10.

In the following, the term "communication profile" is meant to be understood as the communication mode in which transmitting or receiving of data over the field bus is carried out. Especially in the case that the field bus is the AS-Interface, these communication profiles may comprise the set of 4140, 7.3, 7.4 and 7.55 communication profiles.

The AS-Interface slave units 31, 32 may be carried out as virtual slave units, i.e. using one communication circuit with a required number of each register, or using dedicate communication circuits inside the field device 30 for each AS-Interface slave unit 31, 32. Both AS-Interface slave units 31, 32 are located inside the housing of the field device 30, or connected to a responsive communication interface or interfaces of the field device 30.

Preferably, the field device 30 is adapted to set for one AS-Interface slave unit 32 a communication profile P2 that is different from the communication profile P1 that the other AS-Interface slave unit 31 has.

In particular, the field device 30 may be adapted to select the communication profiles P1, P2 from a group of predefined communication profiles, preferably of those supported by the AS-Interface.

One AS-Interface slave unit 31 is preferably adapted for communication of time-critical information messages and the other AS-Interface slave unit 32 is adapted for communication of non-time-critical information messages. Generally, different parameterization and diagnose information can be seen as non-time critical information.

To this end, the AS-Interface slave unit 31 can be a standard 4I4O-slave and the AS-Interface slave unit 32 can be a slave unit with the 7.5.5 - communication profile for serial data transmission. The field device 30 would thus be able to have 6 inputs and 6 outputs for exchange of time critical information messages. By using the slave unit 32 for serial data transmission, parameterization of the field device 30 is possible, or transmission of diagnose data to the control, such as to the master device 10.

The AS-Interface specification 2.1 discloses a protocol, which has also been disclosed in DE 196 06 673 C1, where an AS-Interface slave unit receives an address only for receiving information messages but no transmission of information messages from the slave unit is possible. This protocol can also be used as the suitable protocol for the AS-Interface slave 32. Then the field device 30 would be adapted to set for AS-Interface slave unit 32 a communication profile that enables the AS-Interface slave unit 32 only to receive data from the AS-Interface 50.

The skilled person appreciates that even though the preferred embodiment of the invention was described using the AS-Interface 50 as the field bus, the invention is not limited to the AS-Interface but can be used with any suitable field bus, especially with the IO Link.

The number of the slave field bus units that the field device 30 is adapted to set-up may be larger than two. With three or four slave field bus units, for example, even more data can be transmitted or received through the field bus to the master device 10.

## Claims

1. A field device (30) connectable to a field bus (50), said field device (30) is adapted:
• to set-up at least two slave field bus units (31, 32) by setting for at least one of said slave field bus units (31, 32) a communication profile (P1, P2) that is different from the communication profile (P2, P1) set to one of said slave field bus units (31, 32); and
• to receive messages (MSG) addressed (ADDR) to said at least two slave units (31, 32) from the field bus (50), or to transmit messages (MSG) addressed (ADDR) to originating from one of said at least two slave units (31, 32) to the field bus (50) ;
**characterized in that:** the communication profile of at least one of said at least two slave field bus units (31) is adapted for communication of time-critical information messages and the communication profile of at least one of said at least two slave field bus units (32) is adapted for communication of non-time-critical information messages,and said field bus /50) is the AS-Interface.

2. A field device (30) according to claim 1, **wherein:** the field device (30) is adapted to select said communication profiles (P1, P2) from a group of predefined communication profiles.

3. A field device (30) according to claim 1 or 2, **wherein:**
the field device (30) is adapted to set for at least one of said slave field bus units (31, 32) a communication profile that enables the slave network unit (31, 32) only to receive data from said field bus (50).

4. A method for setting up a field device (30) connectable to a field bus (50), **comprising the step of:** setting up, at the field device (30), at least two slave network units (31, 32) for receiving or for transmitting messages (MSG) addressed (ADDR) to one of each said two slave units (31, 32) from the field bus (50), whereby the setting step comprises the step of setting for at least one of said slave field bus units (32) a communication profile (P2) that is different from the communication profile (P1) set to one of the other slave units (31), **characterised in that**, the communication profile of at least one of said at least two slave field bus units (31) is adapted for communication of time-critical information messages and the communication profile of at least one of said at least two slave field bus units (32) is adapted for communication of non-time-critical information messages,and said field bus (50) is the AS-Interface.

5. A method according to claim 4, **wherein:** said communication profiles (P1, P2) are selected from a group of predefined communication profiles.

6. A method according to preceding claims 4 or 5, **wherein:**
for at least one of said slave field bus units (31, 32) a communication profile that enables the slave network unit (31, 32) only to receive data from said field bus (50) is set.

7. A field bus system (1), **comprising:** a field bus (50),a master device (10) connected to said field bus (50), and at least one field device (30) according to any one of the preceding claims 1 to 3 and connected to said field bus (50).

## Patentansprüche

1. Ein mit einem Feldbus (50) verbindbares Feldgerät (30), das dafür ausgelegt ist:
- durch Einrichten eines Kommunikationsprofils (P1, P2) für mindestens eine der Slave-Feldbuseinheiten (31, 32), das sich von dem für eine der Slave-Feldbuseinheiten (31, 32) eingerichteten Kommunikationsprofil (P2, P1) unterscheidet, mindestens zwei Slave-Feldbuseinheiten (31, 32) einzurichten und
- an die mindestens zwei Slave-Einheiten (31, 32) adressierte (ADDR) Meldungen (MSG) vom Feldbus (50) zu empfangen oder Meldungen (MSG), die an [den Feldbus] adressiert (ADDR) sind und von einer der mindestens zwei Slave-Einheiten (31, 32) stammen, an den Feldbus (50) zu übertragen,
**dadurch gekennzeichnet, dass:**
das Kommunikationsprofil von mindestens einer der mindestens zwei Feldbuseinheiten (31) für das Übermitteln von zeitkritischen Informationsmeldungen und das Kommunikationsprofil von mindestens einer der mindestens zwei Feldbuseinheiten (32) für das Übermitteln von nicht zeitkritischen Informationsmeldungen ausgelegt ist und
es sich bei dem Feldbus (50) um die AS-Schnittstelle handelt.

2. Feldgerät (30) nach Anspruch 1, wobei das Feldgerät (30) so ausgelegt ist, dass es die Kommunikationsprofile (P1, P2) aus einer Gruppe vorgegebener Kommunikationsprofile auswählt.

3. Feldgerät (30) nach Anspruch 1 oder 2, wobei das Feldgerät (30) so ausgelegt ist, dass es für mindestens eine der Slave-Feldbuseinheiten (31, 32) ein Kommunikationsprofil einrichtet, durch das die Slave-Netzwerkeinheit (31, 32) nur Daten von dem Feldbus (50) empfangen kann.

4. Verfahren zum Einrichten eines mit einem Feldbus (50) verbindbaren Feldgerätes (30), das das Einrichten von mindestens zwei Slave-Netzwerkeinheiten (31, 32) am Feldgerät (30) zum Empfangen oder Übertragen von Meldungen (MSG), die an eine der zwei Slave-Einheiten (31, 32) adressiert (ADDR) sind, vom Feldbus (50) umfasst, wobei das Einrichten das Einrichten eines Kommunikationsprofils (P2) für mindestens eine der Slave-Feldbuseinheiten (32) umfasst, das sich von dem für eine der anderen Slave-Einheiten (31) eingerichteten Kommunikationsprofil (P1) unterscheidet,
**dadurch gekennzeichnet, dass:**
das Kommunikationsprofil von mindestens einer der mindestens zwei Feldbuseinheiten (31) für das Übermitteln von zeitkritischen Informationsmeldungen und das Kommunikationsprofil von mindestens einer der mindestens zwei Feldbuseinheiten (32) für das Übermitteln von nicht zeitkritischen Informationsmeldungen ausgelegt ist und
es sich bei dem Feldbus (50) um die AS-Schnittstelle handelt.

5. Verfahren nach Anspruch 4, bei dem die Kommunikationsprofile (P1, P2) aus einer Gruppe vorgegebener Kommunikationsprofile ausgewählt werden.

6. Verfahren nach den vorhergehenden Ansprüchen 4 oder 5, bei dem für mindestens eine der Slave-Feldbuseinheiten (31, 32) ein Kommunikationsprofil eingerichtet wird, durch das die Slave-Netzwerkeinheit (31, 32) nur Daten von dem Feldbus (50) empfangen kann.

7. Feldbussystem (1), das Folgendes umfasst: einen Feldbus (50), ein mit dem Feldbus (50) verbundenes Master-Gerät (10) und mindestens ein Feldgerät (30) nach einem der vorhergehenden Ansprüche 1 bis 3, das mit dem Feldbus (50) verbunden ist.

## Revendications

1. Dispositif de champ (30) connectable à un bus de champ (50), ledit dispositif de champ (30) est adapté :
• pour installer au moins deux unités de bus de champ esclaves (31, 32) en définissant pour au moins l'une desdites unités de bus de champ esclaves (31, 32) un profil de communication (P1, P2) qui est différent du profil de communication (P2, P1) défini pour l'une desdites unités de bus de champ esclaves (31, 32) ; et
• pour recevoir des messages (MSG) adressés (ADDR) auxdites au moins deux unités esclaves (31, 32) provenant du bus de champ (50), ou pour transmettre des messages (MSG) adressés (ADDR) provenant de l'une desdites au moins deux unités esclaves (31, 32) au bus de champ (50) ;
**caractérisé en ce que :** le profil de communication d'au moins l'une desdites au moins deux unités de bus de champ esclaves (31) est adapté pour une communication de messages d'information critiques dans le temps et le profil de communication d'au moins l'une desdites au moins deux unités de bus de champ esclaves (32) est adapté pour une communication de messages d'information non critiques dans le temps, et
ledit bus de champ (50) est l'Interface AS.

2. Dispositif de champ (30) selon la revendication 1, **dans lequel :** le dispositif de champ (30) est adapté pour sélectionner lesdits profils de communication (P1, P2) parmi un groupe de profils de communication prédéfinis.

3. Dispositif de champ (30) selon la revendication 1 ou 2, **dans lequel :** le dispositif de champ (30) est adapté pour définir pour au moins l'une desdites unités de bus de champ esclaves (31, 32) un profil de communication qui permet que l'unité de réseau esclave (31, 32) reçoive uniquement des données provenant dudit bus de champ (50).

4. Procédé pour installer un dispositif de champ (30) connectable à un bus de champ (50), **comprenant l'étape de :** installation, au niveau du dispositif de champ (30), d'au moins deux unités de réseau esclaves (31, 32) pour recevoir ou pour transmettre des messages (MSG) adressés (ADDR) à l'une de chacune desdites deux unités esclaves (31, 32) provenant du bus de champ (50), l'étape d'installation comprenant l'étape de définir pour au moins l'une desdites unités de bus de champ esclaves (32) un profil de communication (P2) qui est différent du profil de communication (P1) défini pour l'une des autres unités esclaves (31), **caractérisé en ce que :** le profil de communication d'au moins l'une desdites au moins deux unités de bus de champ esclaves (31) est adapté pour une communication de messages d'information critiques dans le temps et le profil de communication d'au moins l'une desdites au moins deux unités de bus de champ esclaves (32) est adapté pour une communication de messages d'information non critiques dans le temps, et
ledit bus de champ (50) est l'Interface AS.

5. Procédé selon la revendication 4, **dans lequel :** lesdits profils de communication (P1, P2) sont sélectionnés parmi un groupe de profils de communication prédéfinis.

6. Procédé selon les revendications précédentes 4 ou 5, **dans lequel :** pour au moins l'une desdites unités de bus de champ esclaves (31, 32) un profil de communication qui permet que l'unité de réseau esclave (31, 32) reçoive uniquement des données provenant dudit bus de champ (50) est défini.

7. Système de bus de champ (1), **comprenant :** un bus de champ (50), un dispositif maître (10) connecté audit bus de champ (50), et au moins un dispositif de champ (30) selon l'une quelconque des revendications précédentes 1 à 3 et connecté audit bus de champ (50).
